(19) Europäisches Patentamt
European Patent Office
Office européen des brevets

(11) **EP 1 526 358 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(51) Int Cl.:
***G01C 21/32*** *(2006.01)*

(21) Anmeldenummer: **04104610.3**

(22) Anmeldetag: **23.09.2004**

(54) **Verfahren zur Zerlegung eines Strassennetzes aus Kanten und Knoten**

Method for parcelization of a road network comprising segments and nodes

Procédé de subdivision d'un résau routier comprenant des segments et des noeuds

(84) Benannte Vertragsstaaten:
**DE FR GB IT**

(30) Priorität: **20.10.2003 DE 10349263**

(43) Veröffentlichungstag der Anmeldung:
**27.04.2005 Patentblatt 2005/17**

(73) Patentinhaber: **Continental Automotive GmbH
30165 Hannover (DE)**

(72) Erfinder:
- **Flinsenberg, Ingrid Christina Maria
5616 NV, Eindhoven (NL)**

- **Verriet, Jacobus Hedrikus
5509 NP, Veldhoven (NL)**

(56) Entgegenhaltungen:
**WO-A1-99/58934     US-A- 5 953 722
US-B1- 6 184 823**

- **SUNGWON JUNG ET AL: "An efficient path computation model for hierarchically structured topographical road maps" IEEE TRANSACTIONS ON KNOWLEDGE AND DATA ENGINEERING IEEE USA, Bd. 14, Nr. 5, Oktober 2002 (2002-10), Seiten 1029-1046, XP002314799 ISSN: 1041-4347**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 526 358 B1

**Beschreibung**

Die Erfindung betrifft ein Verfahren zur Bestimmung einer für die Planung einer optimalen Gesamtroute geeigneten Zerlegung eines Straßennetzes aus Kanten und Knoten mit den Schritten: Wahl einer Netzzerlegung, die aus mindestens zwei Zellen besteht, wobei in jeder Zelle mindestens ein Grenzknoten vorhanden ist, welcher über mindestens eine Grenzkante mit einem Grenzknoten einer anderen Zelle verbunden ist; Planung von optimalen Teilrouten innerhalb jeder Zelle zwischen den in der Zelle vorhandenen Grenzknoten und anschließende Bildung eines zur Netzzerlegung gehörenden reduzierten Netzes durch Ersetzen der optimalen Teilrouten durch Routenkanten. Des Weiteren betrifft die Erfindung einen Datenträger, der eine für die Planung einer optimalen Gesamtroute geeignete Zerlegung eines Straßennetzes aus Kanten und Knoten enthält.

Als Grundlage für heutige Routenplanungsalgorithmen werden Straßenpläne in Form von so genannten Straßennetzen oder Graphen modelliert, welche aus Kanten und Knoten bestehen. Die Kanten repräsentieren die Straßen selbst und die Knoten die die Straßen miteinander verbindenden Straßenkreuzungen.

Die Größe der in Routenplanungssystemen verwendeten Straßennetze hat in den letzten Jahren mehr und mehr zugenommen. So wurden beispielsweise in früheren Kraftfahrzeug-Navigationssystemen nur regional begrenzte Straßennetze auf Datenträgern mitgeführt und bei der Routenplanung ausgewertet. Heute können aufgrund der gewachsenen Speicherkapazitäten von Festplatten und Datenträgern bereits die Straßennetze ganzer Kontinente mitgeführt werden. Diese riesigen Datenmengen können jedoch nicht mit einem Mal in den Arbeitsspeicher eines Routenplanungsrechners geladen werden, weshalb Verfahren bekannt sind, mit denen die Straßennetze in kleinere Untereinheiten, so genannte Pakete (Parcels), unterteilt und abgespeichert werden. Die Pakete werden in den bekannten Anwendungen (z.B. WO-9958934-A1) ausgehend von der Rechteckform gebildet, d.h. das von einer Gesamtebene hinterlegte bzw. von einer äußeren Begrenzung vollständig umschlossene Straßennetz wird in Rechtecke unterteilt und die von den Rechtecken umgebenen Teilabschnitte des Straßennetzes werden zu einer logischen Untereinheit, den Paketen, zusammengefasst. Die Größe der Rechtecke kann je nach enthaltener Datenmenge variieren. Die durch die Grenzlinien der Rechtecke verlaufenden Kanten des Straßennetzes werden mittels zusätzlicher Knoten in zwei Kanten unterteilt, so dass alle Kanten eindeutig einem Paket zugeordnet werden können.

Diese Verfahren bringen zwar den Vorteil der effizienteren Speicherverwaltung, haben aber im Hinblick auf die Routenplanung den Nachteil der vergrößerten Anzahl von Knoten und Kanten.

Heutige Routenplanungsalgorithmen werden demnach nicht nur durch die Ausdehnung des Erstreckungsbereiches der abgespeicherten Straßennetze sondern auch durch die aufgrund der Zerlegung der Straßennetze hinzugekommenen Kanten und Knoten ausgebremst, da beide Effekte zu einer Vergrößerung des von der Routenplanung zu durchsuchenden Netzes führen. Einem Benutzer eines Routenplanungssystems sollen jedoch keine unnötigen Wartezeiten zugemutet werden, weshalb nach Lösungen zur Erhöhung der Effizienz der Routenplanungsalgorithmen gesucht wird.

Aus der Schrift "An Efficient Path Computation Model for Hierarchically Structured Topographical Road Maps" von den Autoren Jung und Pramanik (aus IEEE Transactions on Knowledge and Data Engineering, Vol. 14, No. 5, Sept./Oct. 2002, pp. 1029-1046) ist ein Verfahren zur effizienteren Routenplanung bekannt, bei dem das Straßennetz aus Kanten und Knoten zuerst in einen Satz von Teilnetzen unterteilt wird. Die Teilnetze werden im Folgenden auch als Zellen bezeichnet. Die Unterteilung des Straßennetzes erfolgt dabei entlang beliebig wählbarer Grenzen, wobei beispielsweise politische Regionalgrenzen vorgeschlagen werden. Jedes Teilnetz ist über so genannte Grenzkanten (cut connections) mit einem anderen Teilnetz verbunden, d.h. von jedem Teilnetz führt mindestens eine Kante zu einem anderen Teilnetz. Die an den Enden der Grenzkanten befindlichen Knoten werden Grenzknoten genannt (boundary nodes). Innerhalb jedes Teilnetzes wird eine optimale Teilroute zwischen den Grenzknoten dieses Teilnetzes geplant. Optimal bedeutet in diesem Fall, dass die Teilroute ein Kostenkriterium minimiert. Die optimale Teilroute wird durch eine die Grenzknoten verbindende Routenkante (path view connection) ersetzt. Das daraus entstehende Netz aus Grenzknoten, Grenzkanten und Routenkanten bildet die Grundlage für einen reduzierten Suchgraphen bzw. ein reduziertes Suchnetz für den Routenplanungsalgorithmus zur Generierung der Gesamtroute. Die Gesamtroute ist wiederum eine ein Kostenkriterium minimierende Route zwischen frei wählbaren Start- und Zielknoten innerhalb des Straßennetzes. Aufgrund der reduzierten Größe des Suchnetzes findet der Routenalgorithmus die Gesamtroute schneller als bei einer Suche im ursprünglichen Straßennetz.

Das zerlegte Netz wird in Jung und Pramanik als unterste Ebene eines Mehr-Ebenen-Netzes angesehen. Die weiteren Ebenen dieses Netzes werden durch rekursive Zusammenfassung der Teilnetze zu übergeordneten Netzen generiert, wobei die Teilnetze als solche innerhalb der übergeordneten Netze erhalten bleiben. Das Verfahren nach Jung und Pramanik birgt in Bezug auf die Routenplanung den Nachteil, dass die Art der hierarchischen Strukturierung des Mehr-Ebenen-Netzes es erfordert, dass der Routenplanungsalgorithmus, bevor er mit der eigentlichen Planung beginnen kann, sich seinen eigentlichen Suchgraphen erst aus dem Netz heraussuchen und durch spezielle Markierung kenntlich machen muss. Dies erhöht dann wieder die durch die Reduzierung der Anzahl von Kanten und Knoten gewonnene Rechenzeit des Algorithmus.

Aus der US 5 953 722 A ist bekannt, dass bei der Zerlegung von Netzen eine gewisse maximale Größe der Zellen aus Speichergründen nicht überschritten werden darf.

Aus der US 6 184 823 B1 ist eine Zusammenfassung von Daten in Übermengen bekannt, wobei insbesondere komplexe Kreuzungen als "supernodes" dargestellt werden.

Aufgabe der vorliegenden Erfindung ist es, ein Verfahren und einen Datenträger der eingangs genannten Art anzugeben, die eine noch effizientere Routenplanung ermöglichen.

Die Aufgabe wird durch ein Verfahren mit den Merkmalen des Anspruchs 1 gelöst. Aus einer Vielzahl von Netzzerlegungen wird genau die Netzzerlegung ausgewählt, deren zugehöriges reduziertes Netz für ein vorgegebenes Kriterium, hier die im Mittel zu erwartende Anzahl von bei der Planung einer optimalen Gesamtroute zu bewertenden Kanten, einen minimalen Wert ergibt. Diese Netzzerlegung wird auf einem Datenträger abgespeichert.

Bei den bekannten Verfahren werden die Netzzerlegungen entweder auf Basis der Zerlegung in rechteckförmige Pakete oder mittels beliebig wählbarer Zellgrenzen oder durch vorherige Festlegung der Anzahl der zu erzeugenden Zellen gefunden.

Die der Erfindung zugrunde liegende Idee besteht in der Berücksichtigung der späteren Ver- bzw. Anwendung des zerlegten Netzes und in der Bewertung der Qualität des zerlegten Netzes im Hinblick auf diese spätere Anwendung. Die Qualität wird über ein quantitativ zu erfassendes Kriterium bewertet.

Die erfindungsgemäße Herangehensweise erlaubt eine automatische, computergenerierte Zerlegung des Straßennetzes, wobei als Lösung eine für eine spätere Routenplanung besonders günstige Zerlegung gefunden wird. Mit bisherigen Verfahren ist eine solche automatische und gleichzeitig günstige Zerlegung nicht möglich. Entweder wird die Qualität des zerlegten Netzes überhaupt nicht bewertet (Jung und Pramanik) oder es wird verlangt, dass die Zahl der für eine vorteilhafte Netzzerlegung zu erzeugenden Zellen von vornherein bekannt ist. Eine solche Information vor der eigentlichen Netzzerlegung zu erhalten, gestaltet sich in der Praxis als schwierig.

Eine mit dem erfindungsgemäßen Verfahren bzw. einer der im Folgenden beschriebenen Ausführungsvarianten erzeugte Netzzerlegung wird auf einem Datenträger abgespeichert und kann damit einer Routenplanungseinrichtung zur Verfügung gestellt werden. Ein solcher Datenträger kann ein tragbarer Datenträger (CD oder DVD) sein. Dieser kann in beliebigen Routenplanungseinrichtungen eingesetzt werden, beispielsweise für eine Echtzeitroutenplanung in einem mobilen Routenplanungsgerät in einem Kraftfahrzeug oder auch für eine Offline-Routenplanung in einem stationären Routenplanungsgerät im Büro oder der Wohnung des Bedieners. In beiden Fällen wird die im Hinblick auf den Routenplanungsalgorithmus besonders gut angepasste Netzzerlegung zu einer verbesserten Routenplanung führen.

Das mit dem erfindungsgemäßen Verfahren zerlegte und reduzierte Straßennetz soll also die spätere Basis für eine optimale Routenplanung sein. Die Qualität des reduzierten Straßennetzes wird dabei insbesondere durch die von der Routenplanung benötigte Rechenzeit bestimmt, d.h. je schneller die Routenplanung desto besser ist die vorher gefundene Netzzerlegung. Aus diesem Grund wird in einer bevorzugten Ausführung ein Kriterium eingeführt, welches ein Maß für die Rechenzeit der Routenplanung ist. Die Netzzerlegung, die zu einem reduzierten Straßennetz führt, welches für dieses Kriterium einen minimalen Wert ergibt, stellt dann die bestmögliche Voraussetzung für eine schnelle Routenplanung dar.

Da die Rechenzeit eines Routenplanungsalgorithmus direkt von der Anzahl an Kanten und Knoten des zu durchsuchenden Graphen bzw. Suchnetzes abhängt, besteht eine Möglichkeit eines zu minimierenden Kriteriums in der Anzahl der Knoten der, auf Basis des reduzierten Netzes zu bildenden, Suchnetze. Ein solches Suchnetz wird gebildet, nachdem ein Bediener einen Start- und einen Zielknoten innerhalb des ursprünglichen Straßennetzes gewählt hat. Das Suchnetz setzt sich dann zusammen aus den Grenzkanten und Grenzknoten sowie den Routenkanten des reduzierten Netzes sowie den übrigen Kanten und Knoten, die sich innerhalb der Zellen des Start- und Zielknotens befinden. Eine Bewertung der Anzahl der Knoten dieses Suchnetzes würde die bei der Bildung des reduzierten Netzes hinzugekommenen Routenkanten unberücksichtigt lassen, welche unter Umständen eine beträchtliche Zahl erreichen und damit die Rechenzeit der Routenplanung signifikant beeinflussen können. Aus diesem Grund wird gemäß der Erfindung anstelle der Anzahl der Knoten die Anzahl an Kanten minimiert, welche in den auf Basis des reduzierten Netzes möglichen Suchnetzen auftritt.

Das mit dem erfindungsgemäßen Verfahren automatisch zerlegte und reduzierte Netz bietet weiterhin den Vorteil, dass der Suchgraph nicht erst aus dem reduzierten Netz herausgesucht werden muss sondern bereits als solcher vorhanden ist. Lediglich in den Zellen des Start- und des Zielknotens werden anstelle der Routenkanten die ursprünglichen Straßen-Teilnetze in den Suchgraphen eingefügt.

Bei der Minimierung der Zahl der Kanten hat man die Wahl zwischen der Minimierung der Anzahl an maximal auftretenden Kanten und der Minimierung der Anzahl an im Mittel auftretenden Kanten. Von diesen beiden Möglichkeiten wird letztere bevorzugt. Einen Bediener interessiert die mittlere Performance seines Routenplanungssystems, d.h. er möchte für jede mögliche Kombination an Start- und Zielpunkten im Mittel nicht unnötig lange auf das Planungsergebnis warten. Eine Alternative dazu wäre ein System, welches für einzelne Planungsvorgänge einen schnelleren Weg finden und dafür in anderen Fällen eine längere Wartezeit erzeugen würde. Dies wäre für einen Bediener in der Regel weniger akzeptabel.

Die Minimierung der maximalen Anzahl von Kanten würde genau zu einer solchen Alternativlösung führen, nämlich zu einer Netzzerlegung mit besonders wenig Routenkanten und damit wenig Zellen. Eine geringe Anzahl an Zellen bedeutet, dass diese jeweils ein relativ umfangreiches Straßen-Teilnetz enthalten. Demzufolge ist innerhalb der Zellen der Start- und Zielknoten auch eine vergleichsweise zeitaufwändige Planung der Teilrouten erforderlich, die unter Umständen den Vorteil der geringen Anzahl an Routenkanten zunichte macht. Andererseits könnte sich für den speziellen Fall, dass Start- und Zielknoten in ein und derselben Zelle liegen, eine besonders schnelle Routenplanung ergeben.

Um eine Netzzerlegung zu finden, die im Mittel zu einer günstigen Routenplanung führt, wird gemäß der Erfindung die mittleren Anzahl an Kanten minimiert.

Ein reduziertes Netz unterscheidet sich von einem darauf basierenden Suchnetz lediglich durch die zusätzlich gewählten Start- und Zielknoten und die daraus folgende Ersetzung der Routenkanten in den entsprechenden Zellen durch das ursprüngliche Straßen-Teilnetz in diesen Zellen. Die mittlere Anzahl von Kanten in einem solchen Suchnetz entspricht damit der Summe aus der Anzahl der Grenzkanten des reduzierten Netzes, der Anzahl der Routenkanten vermindert um die Routenkanten in den Zellen des Start- und Zielknotens sowie der mittleren Anzahl der Kanten in den Zellen des Start- und des Zielknotens. Unter der Annahme, dass jeder Knoten des Straßennetzes mit gleicher Wahrscheinlichkeit als Start- oder Zielknoten ausgewählt wird, kann die Wahrscheinlichkeit, dass in einer Zelle $C_i$ ein Knoten als Start- oder Zielpunkt ausgewählt wird, als Quotient aus $n_i$ und $n$, $\dfrac{n_i}{n}$, angegeben werden, wobei mit $n_i$ die Anzahl an Knoten in der Zelle $C_i$ bezeichnet wird und mit $n$ die Anzahl an Knoten des gesamten Straßennetzes $G$.

Die mittlere Anzahl von Kanten der auf der Netzzerlegung des Straßennetzes $G$, bestehend aus den Zellen $C_1$ bis $C_k$, basierenden Suchnetze wird als Funktion $f(G, C_1,...,C_k)$ definiert.

Für die mittlere Anzahl von Kanten der auf der Netzzerlegung $\{C_1,...,C_k\}$ basierenden Suchnetze gilt dann:

$$f(G,C_1,...,C_k) = \sum_{i=1}^{k}\left\{\frac{n_i}{n}\left(2-\frac{n_i}{n}\right)m_i + \left(1-\frac{n_i}{n}\right)^2 r_i\right\} + m_B \ ,$$

wobei mit $m_B$ die Anzahl der Grenzkanten der Netzzerlegung, mit $r_i$ die Anzahl der Routenkanten in der Zelle $C_i$ und mit $m_i$ die Anzahl von Kanten in der Zelle $C_i$ bezeichnet werden.

Als zu optimierendes Kriterium für die Rechenzeit des Routenplanungsalgorithmus wäre diese Zahl an Kanten jedoch noch zu konservativ, d.h. zu hoch gegriffen, da man weiterhin berücksichtigen muss, dass ein üblicherweise verwendeter Routenplanungsalgorithmus, wie beispielsweise der A\*-Algorithmus, eine gerichtete Suche im Suchnetz durchführt und deshalb nicht zwangsläufig alle vorhandenen Kanten des Suchnetzes bewerten muss. Aus diesem Grund wird ein Faktor $\alpha$ eingeführt, der einen Wert für die Größe der vom Routenplanungsalgorithmus tatsächlich bewerteten Teilfläche des Suchnetzes darstellt, wobei die Fläche den bewerteten Teil des Suchnetzes ungefähr umschließt. Im Fall des A\*-Algorithmus kann man beispielsweise annehmen, dass eine ellipsenförmige Fläche des Suchnetzes tatsächlich bewertet wird, wobei die Brennpunkte der Ellipse die Start- und Endpunkte des Suchnetzes sind. Für die Entfernung zwischen Start- und Endpunkt wird ein mittlerer Wert angenommen, so dass über diesen Abstand die Fläche der Ellipse leicht berechenbar ist. Der Faktor $\alpha$ kann dann als Verhältnis aus Ellipsenfläche zur Fläche des gesamten Straßennetzes angegeben werden.

Die Anzahl der vom Routenplanungsalgorithmus bei der Berechnung der optimalen Gesamtroute bewerteten Kannten ergibt sich dann aus der Summe der Anzahl der Kanten in der Start- und Zielzelle und der Anzahl von Grenzkanten und Routenkanten des Suchnetzes multipliziert mit $\alpha$.

Die geschätzte Anzahl $g(G, C_1,...,C_k)$ von bei der Planung einer optimalen Gesamtroute zu bewertenden Kanten ergibt sich damit aus:

$$g(G,C_1,...,C_k) = \sum_{i=1}^{k}\left\{\frac{n_i}{n}\left(2-\frac{n_i}{n}\right)m_i\right\} + \alpha\left(\sum_{i=1}^{k}\left\{\left(1-\frac{n_i}{n}\right)^2 r_i\right\} + m_B\right)$$

Um also die im Hinblick auf die Routenplanung bestmögliche Netzzerlegung zu erhalten, ist folgendes Optimierungsproblem zu lösen:

Finde eine Netzzerlegung $\{C_1,...,C_k\}$ von $G$, die die Funktion

$$g(G, C_1, ..., C_k) = \sum_{i=1}^{k} \left\{ \frac{n_i}{n} \left( 2 - \frac{n_i}{n} \right) m_i \right\} + \alpha \left( \sum_{i=1}^{k} \left\{ \left( 1 - \frac{n_i}{n} \right)^2 r_i \right\} + m_B \right)$$

minimiert.

Die Funktion g als Kriterium zur Bestimmung der Anzahl der bei der Planung einer optimalen Gesamtroute zu bewertenden Kanten stellt nur eine von verschiedenen Möglichkeiten dar. So basiert die Funktion g auf der Annahme, dass alle Knoten mit gleicher Wahrscheinlichkeit als Start- oder Zielknoten ausgewählt werden können. Andere Bewertungsfunktionen können beispielsweise zusätzlich die Erkenntnis berücksichtigen, dass die Knoten innerhalb von Ortschaften mit höherer Wahrscheinlichkeit gewählt werden als die Knoten in freier Landschaft. Des Weiteren werden von den Knoten innerhalb der Ortschaften wiederum die zu Straßen mit besonders vielen Hausnummern gehörenden öfter gewählt als die Knoten kurzer oder wenig bewohnter Straßen.

Die Funktion g als eine Möglichkeit eines Bewertungskriteriums einer Netzzerlegung stellt also den Ausgangspunkt für die Suche nach einer optimalen Netzzerlegung dar. Da das oben genannte Optimierungsproblem ein sehr komplexes Problem darstellt, welches mit heutigen Mitteln und Methoden nicht in vertretbarer Zeit gelöst werden könnte, werden bevorzugt Algorithmen verwendet, die eine approximierte Lösung des Problems finden. Auch hierbei stehen mehrere mögliche Algorithmen zur Verfügung, von denen die im Folgenden beschriebenen beispielhaft ausgewählt wurden. Als eine Kategorie von effektiv zu realisierenden Netzzerlegungsalgorithmen haben sich die so genannten Nachbarschafts-Suchalgorithmen erwiesen, die eine Netzzerlegung inklusive aller ihrer benachbarten Netzzerlegungen bewerten.

Ein solcher Nachbarschafts-Suchalgorithmus ist der Vereinigungsalgorithmus. Dieser Netzzerlegungsalgorithmus basiert auf einer rekursiven Vereinigung von Zellen. Dafür wird zu Beginn das Straßennetz in so genannte Einzelzellen zerlegt, d.h. für jeden Knoten wird eine einzelne Zelle definiert. Diese Zellen werden rekursiv zu neuen, größeren Zellen vereint, bis nur noch eine einzige Zelle vorhanden ist, die das gesamte Straßennetz umfasst. Bevorzugt werden immer jeweils nur zwei Zellen zu einer neuen Zelle vereint. Möglich wäre dieses Vorgehen auch mit drei oder mehr Zellen, je nachdem, wie weit die Vereinigung bereits fortgeschritten ist. Nach jeder Vereinigung wird die Funktion g für die gerade vorliegende Netzzerlegung berechnet und die Netzzerlegung mit dem bis dahin geringsten Wert für g wird abgespeichert. Als Ergebnis des Vereinigungsalgorithmus erhält man also die Netzzerlegung, die die Funktion g minimiert.

Ein anderer möglicher Algorithmus zur Netzzerlegung ist der Teilungsalgorithmus. Dieser unterteilt das Straßennetz rekursiv in Zellen bis nur noch Einzelzellen vorhanden sind. Bevorzugt wird immer eine Zelle in jeweils zwei neue Zellen unterteilt. Aber auch eine Unterteilung in mehr Zellen ist denkbar. Nach jeder Unterteilung wird der Wert der Funktion g für die aktuell vorliegende Netzzerlegung berechnet und die Netzzerlegung mit dem kleinsten Wert für g wird abgespeichert.

Der Vereinigungsalgorithmus erzeugt im Allgemeinen deutlich weniger Zellen als der Teilungsalgorithmus und war in Versuchen mehr als zwei Mal so schnell wie der Teilungsalgorithmus. Die generierten Netzzerlegungen haben sich außerdem als besser geeignet für eine optimale Routenplanung erwiesen, weshalb der Vereinigungsalgorithmus eindeutig dem Teilungsalgorithmus vorzuziehen ist.

Bei beiden Algorithmen können natürlich auch andere Abbruchkriterien als das Vorhandensein von einer einzigen Zelle bzw. von Einzelzellen verwendet werden. Da beispielsweise ein Netz aus vielen Zellen mit jeweils wenigen Knoten mit einer hohen Anzahl an Grenz- und Routenkanten und damit einem hohen Wert für g einhergeht, könnte der Splitting-Algorithmus bereits bei Unterschreitung einer minimalen Zellgröße beendet werden.

Alternativ zum schrittweisen Vorgehen können die Algorithmen auch unter Zuhilfenahme von Zufallszahlen gerechnet werden, wobei der Anfangswert (seed) des Zufallszahlen-Generators gespeichert und damit die Möglichkeit einer exakten Wiederholung sichergestellt wird.

Die bisher erläuterten Algorithmen zur Netzzerlegung erzeugen ein Netz, bei welchem jede Zelle ausschließlich Kanten und Knoten enthält. Diese Netzzerlegung wird auch als Einfach-Netzzerlegung bezeichnet. Vereinigt man solche Zellen wiederum miteinander, ohne die Zellen aufzulösen, so erhält man eine neue Zelle, die selbst Zellen enthält. Das Ergebnis ist ein Netzwerk aus mehreren Ebenen, wobei die unterste Ebene wiederum aus Zellen mit ausschließlich nur Kanten und Knoten besteht. Diese Netzzerlegung wird Mehrfach-Netzzerlegung genannt. Eine Mehrfach-Netzzerlegung erhält man auch, wenn man eine Zelle mit mehreren Kanten und Knoten in weitere Zellen unterteilt und dabei die Ursprungszelle als umschließende Zelle beibehält. Die Ursprungszelle wird in dem Fall als Zellnetz bezeichnet, da sie miteinander über Grenzkanten verbundene Zellen enthält. Diese im Zellennetz enthaltenen Zellen stellen damit Knoten dar, so genannte Zellknoten.

Eine weitere Möglichkeit der Netzzerlegung besteht also in der Generierung einer Mehrfach-Netzzerlegung, wobei die Mehrfach-Netzzerlegung bevorzugt auf Basis der mit den oben beschriebenen Verfahren gewonnenen Einfach-Netzzerlegung gewonnen wird. Alternativ kann jede andere Einfach-Netzzerlegung als Ausgangspunkt gewählt werden. Auch bei der Mehrfach-Netzzerlegung wird wieder zwischen der Vereinigung und der Teilung von Zellen unterschieden.

Bei der Mehrfach-Teilung werden die bei der Einfach-Netzzerlegung gewonnenen Zellen weiter unterteilt, wobei die ursprünglichen Zellen erhalten bleiben. Damit wird aus jeder ursprünglichen Zelle ein Zellnetz. Bei der Mehrfach-Vereinigung werden die bei der Einfach-Netzzerlegung gewonnenen Zellen weiter miteinander zu Zellnetzen vereinigt, wobei die ursprünglichen Zellen erhalten bleiben.

Um bei solchen Mehrfach-Netzzerlegungen das Verhalten des zerlegten Netzes im Hinblick auf die Rechenzeit der Routenplanung nicht zu verschlechtern, wird nach jedem einzelnen Verfahrensschritt, Teilung oder Vereinigung, geprüft, ob die aktuell vorliegende Mehrfach-Netzzerlegung die Zahl der bei der Planung der optimalen Gesamtroute zu bewertenden Kanten gegenüber der vorherigen Netzzerlegung, welche die Einfachoder eine vorherige Mehrfach-Netzzerlegung sein kann, nicht erhöht. Wird die Zahl der zu bewertenden Kanten kleiner oder bleibt wenigstens gleich, wird die Teilung bzw. Vereinigung zugelassen, ansonsten wird sie verworfen.

Als Ergebnis erhält man also aus einer solchen Mehrfach-Netzzerlegung immer eine Zerlegung, die im Hinblick auf die Routenplanung besser geeignet ist als die zugrunde liegende Einfach-Netzzerlegung.

Während der Suche nach der bestmöglichen Einfach- oder Mehrfach-Netzzerlegung wird zur Berechnung der Funktion g die Anzahl der Routenkanten benötigt. Diese wird jeweils aus der Anzahl der Grenzknoten der Zellen ermittelt. Ist die gewünschte Netzzerlegung gefunden, werden zwischen den Grenzknoten der entstandenen Zellen die optimalen Teilrouten berechnet und durch Routenkanten ersetzt, da ja die Routenkanten zum zu bewertenden reduzierten Netz gehören.

Die erfindungsgemäßen Verfahrensschritte der Suche nach einer Netzzerlegung, der Planung optimaler Teilrouten und Ersetzung dieser Teilrouten durch Routenkanten werden sinnvoller Weise bei der Erstellung eines für eine Routenplanungseinrichtung zu verwendenden Datenträgers ausgeführt und das Ergebnis, also die Netzzerlegung inklusive dem zugehörigen reduzierten Netz aus Grenzkanten und -knoten sowie Routenkanten wird fest auf diesem Datenträger abgespeichert. Der Datenträger kann dabei entweder tragbar, also eine CD oder DVD, oder ein fest installierter Permanentspeicher, wie beispielsweise eine Festplatte, sein. Um am Ende die optimale Gesamtroute innerhalb des ursprünglichen Straßennetzes anzeigen zu können, ist bei ausreichendem Speicherplatz auch die zusätzliche Abspeicherung dieses Netzes denkbar.

Die auf Basis der gefundenen Einfach- oder Mehrfach-Netzzerlegung durchzuführende Routenplanung findet auf einer beliebigen Routenplanungseinrichtung statt, nachdem ein Bediener einen beliebigen Start- und Zielknoten ausgewählt hat. Um die auf dem Datenträger abzuspeichernden Informationen noch besser auf die Routenplanung abzustimmen, wird im Folgenden ein besonders gut für reale Straßennetze geeigneter Routenplanungsalgorithmus in die Überlegungen mit einbezogen.

Als Routenplanungsalgorithmus wird in heutigen Systemen häufig der A*-Algorithmus verwendet, der auf dem Dijkstra-Algorithmus basiert. Für den A*-Algorithmus ist die Kenntnis der mit einer bestimmten Route verbundenen Kosten notwendig. Solche Kosten können beispielsweise die zurückzulegende Entfernung oder die benötigte Fahrzeit sein. Der A*-Algorithmus versucht dann die Route zu finden, welche die geringsten Kosten verursacht, d.h. er berechnet beispielsweise die kürzeste oder die am schnellsten zurückzulegende Gesamtroute.

Dabei geht der A*-Algorithmus von Knoten zu Knoten vor, wobei er die jeweiligen Kosten aus den abgespeicherten Koordinaten der Knoten ermittelt.

Da es in heutigen realen Straßennetzen häufig Straßen mit beschränkten Abzweigmöglichkeiten gibt, wurde ein Routenplanungsalgorithmus namens C* entwickelt (aus der Schrift "Using turn restrictions for faster route planning with partitioned road networks", Proc. of the 10th Saint Petersburg Int. Conference on Integrated Navigation Systems, Saint Petersburg, Russia, May 2003). Der C*-Algorithmus bewertet die Kosten nicht in Verbindung mit den Knoten sondern mit den Kanten des Netzwerkes, da dies im Fall von beschränkten Abzweigmöglichkeiten zu besseren Routen führt.

Um die Beschränkung der Abzweigmöglichkeiten im Straßennetz abzubilden, werden bevorzugt gerichtete Kanten verwendet, d.h. mit den Kanten wird die erlaubte Fahrtrichtung gespeichert. Die Abspeicherung der Fahrtrichtung ist jedoch nicht in jedem Fall notwendig, da ein optimaler Routenplanungsalgorithmus im allgemeinen sowohl mit gerichteten als auch ungerichteten Kanten oder auch einer Mischung aus beiden umgehen kann. Die Kosten der Kanten können beispielsweise zur Ermittlung einer kürzesten Gesamtroute über die Längen der Kanten und zur Erzeugung einer schnellsten Route über die für die Kante zu verwendende Fahrtzeit bestimmt sein.

Um den besser an die Realität angepassten C*-Algorithmus verwenden zu können, müssen nicht nur die Ursprungskanten des Straßennetzes sondern auch die erzeugten Routenkanten mit Kosteninformationen versehen werden. Diese Kosteninformationen gewinnt man automatisch bei der Berechnung der optimalen Teilrouten, sozusagen als Gesamtkosten dieser optimalen Teilrouten. Die Gesamtkosten der optimalen Teilrouten werden also bevorzugt mit den, die Teilrouten ersetzenden, Routenkanten abgespeichert.

Des Weiteren ist es möglich, auch die optimalen Teilrouten selbst abzuspeichern. Die mit der Netzzerlegung berechnete optimale Gesamtroute kann ja in dieser Form noch nicht dem Bediener angezeigt werden, da in ihr noch die Routenkanten anstelle der eigentlichen Straßen-Teilnetze enthalten sind. Nach der Berechnung der optimalen Gesamtroute könnten die Routenkanten sehr schnell ersetzt werden, wenn die optimalen Teilrouten bereits im Speicher abgelegt sind. Sofern jedoch das Straßennetz sehr groß ist, könnten sehr viele optimale Teilrouten berechnet worden sein, was wieder zu einem großen Speicherplatzbedarf führen würde. Je nach Anwendung ist also zu entscheiden, ob die Rechenleistung ausreicht, die optimalen Teilrouten am Ende der Planung der Gesamtroute noch einmal zu berechnen oder ob der Speicherplatz vorhanden ist, um die Teilrouten bereits im Routenplanungsgerät mitzuführen.

In einer speziellen Ausführung der Erfindung wird in jeder Zelle der Einfach-Netzzerlegung ein so genannter Routenknoten eingeführt. Über diesen Routenknoten verlaufen alle Verbindungen zu den Grenzknoten dieser Zelle, d.h. zwei Grenzknoten werden jeweils über zwei Routenkanten und den Routenknoten miteinander verbunden. Die Kosten der optimalen Teilroute zwischen diesen zwei Grenzknoten werden dann als Kosten des entsprechenden Paares von, die Teilroute ersetzenden, Routenkanten abgespeichert.

Die Teilstücke der Gesamtroute, bei denen die Routenkanten durch die zugehörigen optimalen Teilrouten bereits ersetzt sind, können dann an den Bediener ausgegeben werden. Da die Startzelle bereits mit ihrem ursprünglichen Straßen-Teilnetz in die Routenplanung mit einbezogen wird, ist dort eine Ersetzung nicht mehr notwendig, weshalb der erste Teil der Route bereits unmittelbar nach seiner Berechnung ausgegeben werden kann. Gegenüber herkömmlichen Routenplanungsverfahren kann dies merklich früher geschehen, da ja die Routenplanung selbst deutlich weniger Rechenzeit benötigt als früher.

Bei den bisher durchgeführten Versuchen mit den erfindungsgemäßen Netzzerlegungsverfahren fiel auf, dass die optimalen Netzzerlegungen Zellgrenzen aufweisen, welche bevorzugt entlang natürlicher Trennlinien zwischen Straßen verlaufen, wie beispielsweise Flüssen oder Bahnlinien. Dies resultiert aus der Vorgabe, dass die Anzahl an Kanten möglichst minimal ausfallen soll. Bei natürlichen Trennlinien zwischen Straßen treten logischerweise wenige Grenzkanten, beispielsweise Brücken, zwischen den entstehenden Zellen auf. Wählt man kein automatisches sondern ein per Hand zu beeinflussendes Netzzerlegungsverfahren sind demnach natürliche Trennlinien zur Vorgabe von Zellgrenzen zu bevorzugen.

Die Erfindung wird nachfolgend anhand der Zeichnung veranschaulicht. Es zeigen:

Fig. 1      ein Straßennetz aus gerichteten Kanten und Knoten;
Fig. 2      die bei einer Zerlegung des Straßennetzes entstandenen Zellen;
Fig. 3      die bei der Zerlegung entstandenen Grenzkanten und Grenzknoten;
Fig. 4      die nach der Zerlegung vorliegende Einfach-Netzzerlegung aus Grenzkanten, Grenzknoten und Straßen-Teilnetzen;
Fig. 5      das auf Basis der Einfach-Netzzerlegung entstandene reduzierte Netz mit Routenkanten;
Fig. 6      ein auf Basis des reduzierten Netzes mögliches Suchnetz;
Fig. 7      eine Mehrfach-Netzzerlegung auf Basis des reduzierten Netzes;
Fig. 8      ein auf Basis der Mehrfach-Netzzerlegung mögliches Suchnetz;
Fig. 9      ein Ablaufdiagramm für die Startroutine eines Vereinigungsalgorithmus;
Fig. 10     ein Ablaufdiagramm für die Bestimmung eines reduzierten Netzes;
Fig. 11     ein Ablaufdiagramm für einen Suchalgorithmus zur Netzzerlegung.

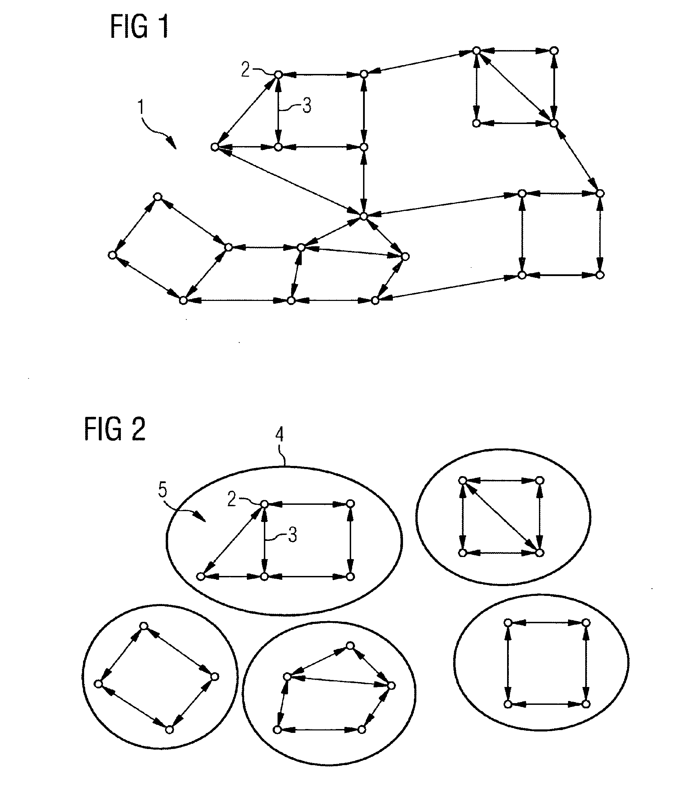

Fig. 1 zeigt ein Beispiel für ein Straßennetz 1 aus Knoten 2 und gerichteten Kanten 3. In diesem Straßennetz 1 sind stets beide Fahrtrichtungen erlaubt. In Verbindung mit den Kanten 3 sind jedoch nicht nur die Fahrtrichtungen sondern auch die so genannten Kosten abgespeichert, die als Informationen für einen optimalen Routenplanungsalgorithmus benötigt werden. In diesem Beispiel sind als Kosten der Kanten 3 die zwischen ihren zugehörigen Knoten 2 zurückzulegenden Fahrtstrecken erfasst.

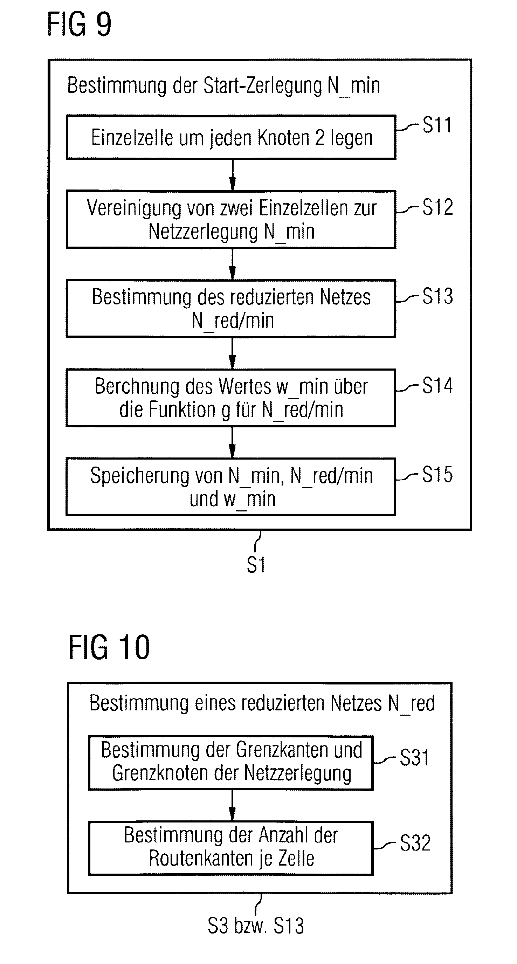

Um die Rechenzeit für die Bestimmung einer optimalen Fahrtroute innerhalb des Straßennetzes 1 zu verringern, wird nach einer Netzzerlegung gesucht, bei der die Anzahl der während der Routenplanung zu bewertenden Kanten minimiert ist. Um eine solche Netzzerlegung zu finden, wird um jeden Knoten 2 eine Einzelzelle gelegt (Schritt S11, Fig. 9) und diese Einzelzellen werden rekursiv zu größeren Zellen vereint.

Für die nach jeder Vereinigung vorliegende Netzzerlegung wird dann ein Wert nach der Funktion g für die zu erwartende Anzahl an zu bewertenden Kanten berechnet und die Netzzerlegung mit dem bis dahin minimalen Wert wird gespeichert.

Um den rekursiven Algorithmus überhaupt starten zu können, wird zuerst eine so genannte Start-Zerlegung N gebildet, indem zwei Einzelzellen zu einer größeren Zelle vereint werden (S12, Fig. 9). Für diese Start-Zerlegung N wird nach der Routine aus Fig. 10 ein reduziertes Netz $N_{red}$ bestimmt (S13, Fig. 9). Dazu werden die Grenzkanten und Grenzknoten innerhalb der Netzzerlegung N ermittelt (S31), wobei es sich in diesem speziellen Fall um genau zwei Grenzknoten in einer Zelle handelt. Aus der Anzahl an Grenzknoten je Zelle wird die Anzahl der Routenkanten je Zelle ermittelt (S32).

Nach der Bestimmung des zur Start-Zerlegung N gehörenden reduzierten Netzes $N_{red}$ wird auf dessen Basis der Wert w der Funktion g berechnet (S14, Fig. 9). Der Wert w wird gemeinsam mit der Start-Zerlegung N und dem zugehörigen reduzierten Netz $N_{red}$ abgespeichert, und zwar unter der Bezeichnung der zu einem minimalen Wert $w_{min}$ führenden Netzzerlegung $N_{min}$ bzw. $N_{red/min}$.

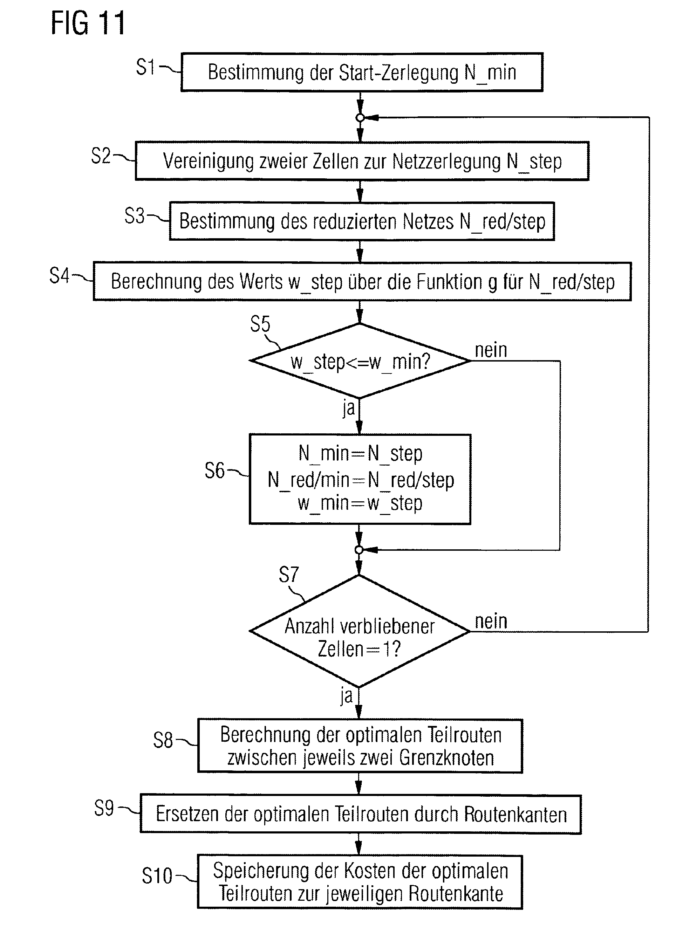

Nach der Bestimmung der Start-Zerlegung $N_{min}$ (S1, Fig. 11) kann der eigentliche rekursive Suchalgorithmus beginnen. Es werden erneut zwei Zellen vereint, wodurch die Netzzerlegung $N_{step}$ entsteht (S2). Für diese Netzzerlegung $N_{step}$ wird nach den Verfahrensschritten aus Fig. 10 ein reduziertes Netz $N_{red/step}$ ermittelt (S3) und dafür der Wert $w_{step}$ der Funktion g berechnet (S4). Der abgespeicherte Wert $w_{min}$ wird mit dem Wert $w_{step}$ verglichen (S5). Ist $w_{step}$ kleiner oder gleich groß zu $w_{min}$, so bildet die aktuell gefundene Netzzerlegung $N_{step}$ die neue, zu einem minimalen $w_{min}$ führende Netzzerlegung $N_{min}$ (S6). Ist $w_{step}$ jedoch größer als $w_{min}$, folgt sofort Schritt S7. Dort wird überprüft, ob die Anzahl der in $N_{step}$ verbliebenen Zellen nur noch Eins beträgt, d.h. ob bereits das gesamte ursprüngliche Straßennetz zu einer einzigen Zelle vereint wurde. Ist dies der Fall, so ist der eigentliche Suchalgorithmus damit beendet und die zuletzt abgespeicherte Netzzerlegung $N_{min}$ stellt die für eine schnelle Routenplanung am besten geeignete Netzzerlegung dar. Sind jedoch noch mehr als eine Zelle vorhanden, so wird mit Schritt S2 fortgesetzt, d.h. es werden erneut zwei Zellen miteinander vereint.

Nachdem die Netzzerlegung $N_{min}$ gefunden wurde, werden noch die optimalen Teilrouten zwischen jeweils zwei Grenzknoten einer Zelle berechnet (S8) und durch Routenkanten ersetzt (S9). Die mit den optimalen Teilrouten verbundenen Kosten werden gemeinsam mit der zugehörigen Routenkante abgespeichert (S10).

Ein mögliches Ergebnis einer rekursiven Vereinigung mit den dabei entstandenen Zellen 4 ist in Fig. 2 zu sehen. Die innerhalb der Zellen 4 befindlichen Knoten 2 und Kanten 3 des Straßennetzes 1 bilden die Straßen-Teilnetze 5.

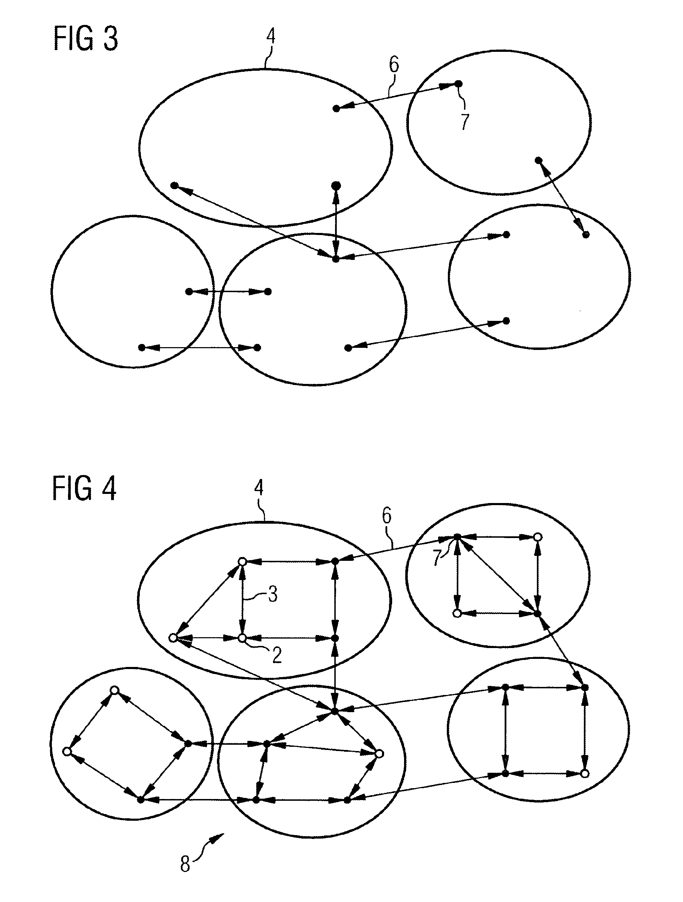

Aus den durch die Grenzen der Zellen 4 hindurch laufenden Kanten 3 werden die so genannten Grenzkanten 6 (Fig. 3), und die Knoten 2 am Ende dieser Grenzkanten 6 bilden die Grenzknoten 7. Die Grenzkanten 6 und die Grenzknoten 7 sind in Fig. 3 dargestellt, wobei die Grenzknoten 7 in den nachfolgenden Figuren zur Unterscheidung von den übrigen Knoten 2 schwarz eingefärbt sind.

Die resultierende Einfach-Netzzerlegung 8 ($N_{min}$) aus Grenzkanten 6, Grenzknoten 7 sowie den innerhalb der Zellen 4 befindlichen, übrigen Kanten 3 und Knoten 2 ist in Fig. 4 zu sehen.

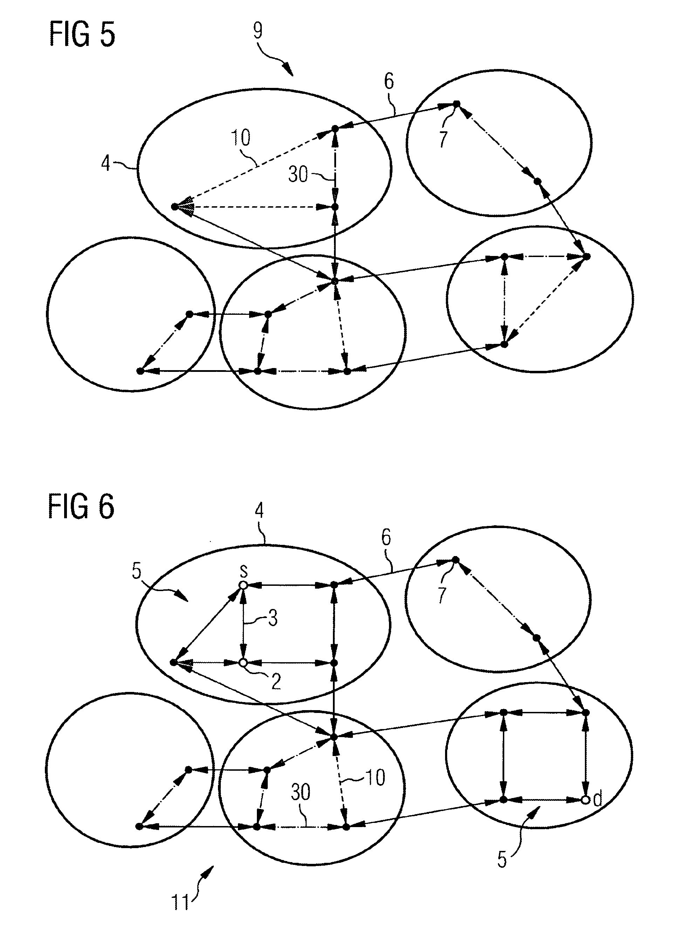

Das auf der Basis der Einfach-Netzzerlegung 8 gebildete reduzierte Netz 9 ($N_{red}$) ist in Fig. 5 dargestellt. Zwischen den Grenzknoten 7 einer Zelle wurden optimale Teilrouten und die damit verbundenen Kosten in Form des zurückzulegenden Weges berechnet. Die optimalen Teilrouten wurden durch, gestrichelt dargestellte, Routenkanten 10 ersetzt, wobei die Kosten der Teilrouten gemeinsam mit den Routenkanten 10 abgespeichert sind. In den Fällen, in denen Grenzknoten 7 bereits durch Kanten 3 miteinander verbunden waren, welche für sich genommen wieder optimale Teilrouten repräsentieren, bleiben diese Kanten 3 mit ihren Kosten bestehen. Um sie von den übrigen Kanten 3 zu unterscheiden, sind sie hier als Kanten 30 bezeichnet und strichpunktiert dargestellt. Repräsentieren die Kanten 3 zwischen Grenzknoten 7 keine optimalen Teilrouten, werden auch diese durch Routenkanten 10 ersetzt. Aus verfahrensökonomischen Gründen kann es sinnvoll sein, keine explizite Überprüfung der bereits vorhandenen Kanten 3 zwischen Grenzknoten 7 vorzunehmen, d.h. der Algorithmus behandelt dann alle Grenzknoten 7 in gleicher Weise und speichert demzufolge auch die Kanten 30 als Routenkanten 10 ab.

Die übrigen weiß dargestellten Knoten 2 und die übrigen Kanten 3 sind aus dem Netz entfernt worden.

Ein auf der Basis dieses reduzierten Netzes 9 entstandenes Suchnetz 11 geht aus Fig. 6 hervor. Der Startpunkt s und der Zielpunkt d befinden sich in den Zellen 41 beziehungsweise 42. In diesen Zellen werden die Routenkanten 10 bzw. 30 durch das jeweilige ursprüngliche Straßen-Teilnetz 5 ersetzt.

Für das reduzierte Netz 9 sind damit alle zur Berechnung der Funktion g erforderlichen Werte bekannt. Die Anzahl der Grenzkanten der Einfach-Netzzerlegung 8 beträgt $m_B=8$ und die Zahl der Zellen 4 kann mit k=5 angegeben werden. Für jede der fünf Zellen 4 sind des weiteren bekannt die Anzahl $n_i$ der Knoten 2 des jeweiligen Straßen-Teilnetzes 5, die Anzahl $r_i$ der Routenkanten, wobei die Kanten 10 und 30 gemeinsam gerechnet werden, sowie die Anzahl $m_i$ der übrigen Kanten 3. Die Gesamtzahl aller Knoten 2 beträgt n=22. Der Wert $\alpha$ als Quotient aus einer mittleren Ellipsenfläche und der Fläche des Straßennetzes 1 wird wie oben beschrieben bestimmt.

Da in diesem Fall angenommen wird, dass die Funktion g für die Einfach-Netzzerlegung 8 (Fig. 4) bzw. für das daraus resultierende Netz 9 (Fig. 5) im Vergleich zu allen anderen aus dem Straßennetz 1 gewonnenen Einfach-Netzzerlegungen den kleinsten Wert ergibt, liegt hiermit die bestmögliche Einfach-Netzzerlegung 8 vor.

In dem dargestellten Beispiel wird mit angedeutet, dass das erfindungsgemäße Verfahren dazu führt, dass bevorzugt die natürlich vorliegenden Trennlinien innerhalb des Straßennetzes 1 zur Positionierung der Zellgrenzen genutzt werden. Als Folge davon "durchtrennen" die Zellgrenzen möglichst wenige der Kanten 3 des Straßennetzes 1 (vgl. Fig. 1 und 2).

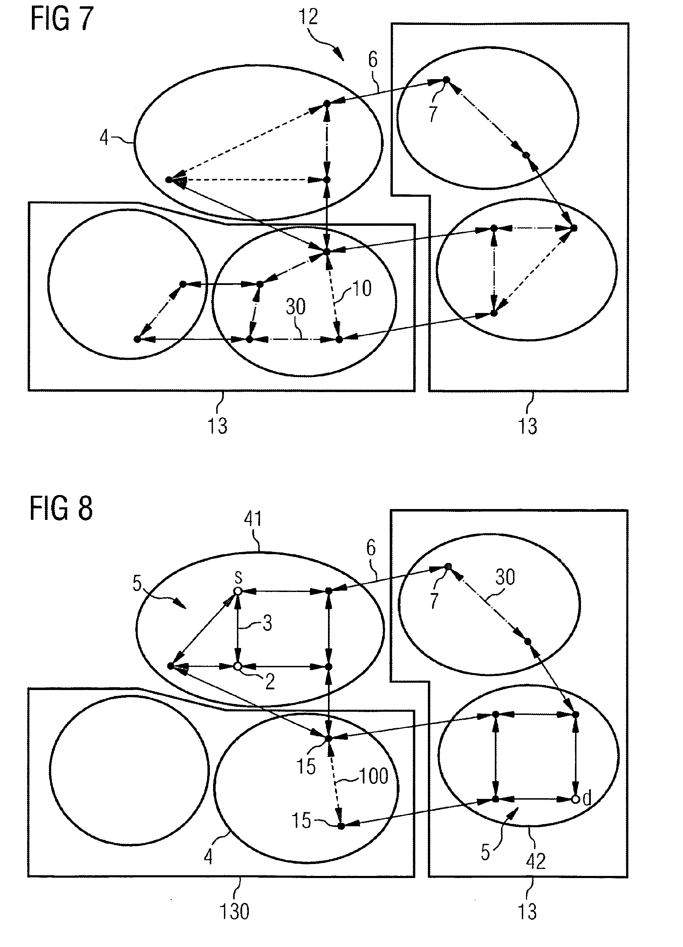

Ausgehend von der Einfach-Netzzerlegung 9 kann eine Mehrfach-Netzzerlegung 12 (Fig. 7) gefunden werden, welche die Anzahl der durch die Routenplanung zu bewertenden Kanten weiter reduziert. Als Beispiel wurden in Fig. 7 jeweils zwei der Zellen 4 zu größeren Zellen 13 vereint, wobei die Zellen 4 des reduzierten Netzes 9 beibehalten wurden. Die Zellen 13 werden auch als Zellnetze bezeichnet und die innerhalb der Zellen 13 befindlichen Zellen 4 als Zellknoten.

In Fig. 8 ist ein auf der Mehrfach-Netzzerlegung 12 basierendes Suchnetz 14 mit denselben Start- und Zielknoten s und d wie in Fig. 6 zu sehen. Innerhalb der Start- und Zielzellen 41 und 42 wurden wieder die Routenkanten 10 bzw. 30 durch die ursprünglichen Straßen-Teilnetze 5 ersetzt. Für das Zellnetz 130 haben sich durch die Vereinigung zwei neue Grenzknoten 15 ergeben. Die diese Grenzknoten 15 verbindende optimale Teilroute wird durch die Routenkante 100 repräsentiert. Alle übrigen Routenkanten 30, Grenzkanten 6 und Grenzknoten 7 der Zellknoten des Zellnetzes 130 entfallen.

Wie aus einem Vergleich zwischen den Figuren 6 und 8 deutlich wird, hat sich zwar die Anzahl der Zellen bei der Mehrfach-Netzzerlegung 12 von fünf auf sieben erhöht, jedoch konnte die Anzahl der zu dem Suchnetz 14 gehörenden Kanten um sechs verringert werden.

## Patentansprüche

1. Verfahren zur Bestimmung einer für die Planung einer optimalen Gesamtroute geeigneten Zerlegung eines Straßennetzes (1) aus Kanten (3) und Knoten (2) mit den Schritten:

   - Wahl einer Netzzerlegung, die aus mindestens zwei Zellen (4) besteht, wobei in jeder Zelle (4) mindestens ein Grenzknoten (7) vorhanden ist, welcher über mindestens eine Grenzkante (6) mit einem Grenzknoten (7) einer anderen Zelle (4) verbunden ist,
   - Planung von optimalen Teilrouten innerhalb jeder Zelle (4) zwischen den in der Zelle vorhandenen Grenzknoten (7),
   - Bildung eines zur Netzzerlegung gehörenden reduzierten Netzes (9) durch Ersetzen der optimalen Teilrouten durch Routenkanten (10),

   **dadurch gekennzeichnet, dass**
   aus einer Vielzahl von Netzzerlegungen genau die Netzzerlegung ausgewählt wird, deren zugehöriges reduziertes Netz (9) als ein vorgegebenes Kriterium die im Mittel zu erwartende Anzahl von bei der Planung einer optimalen Gesamtroute zu bewertenden Kanten (3, 10) minimiert, wobei die im Mittel zu erwartende Anzahl von zu bewertenden Kanten (3, 10) durch die mittlere Anzahl der Kanten (3, 10) der auf dem reduzierten Netz (9) basierenden, für die Planung einer optimalen Gesamtroute zwischen einem Start- und Zielknoten (s, d) verwendeten Suchnetze (14) bestimmt ist, wobei ein Suchnetz (14) aus Grenzkanten (6), Grenzknoten (7), Routenkanten (10) und den übrigen Kanten (3) und Knoten (2) innerhalb der Zellen (4) des Start- und des Zielknotens (s, d) besteht.

2. Verfahren nach Anspruch 1, **dadurch gekennzeichnet, dass** die zu erwartende Anzahl von bei der Planung einer optimalen Gesamtroute zu bewertenden Kanten (3, 10) gebildet wird durch die Summe aus der mittleren Anzahl der Kanten (3) in den Zellen (4) des Start- und des Zielknotens (s, d) und der mit dem Verhältnis aus der Fläche des zu bewertenden Teils des Suchnetzes (14) und der Fläche des Straßennetzes multiplizierten Anzahl der Grenzkanten (6) und der Routenkanten (10) reduziert um die Routenkanten (10) in den Zellen (41, 42) des Start- und Zielknotens (s, d).

3. Verfahren nach einem der vorhergehenden Ansprüche, **dadurch gekennzeichnet, dass** aus einer Vielzahl von Einfach-Netzzerlegungen (8) die beste Einfach-Netzzerlegung (8) ausgewählt wird, wobei eine Einfach-Netzzerlegung (8) aus Zellen (4) besteht, welche ausschließlich Kanten (3) und Knoten (2) enthalten.

4. Verfahren nach Anspruch 3, **dadurch gekennzeichnet, dass** das Straßennetz in Einzelzellen, die jeweils nur einen Knoten (2) enthalten, unterteilt wird und die Einzelzellen rekursiv zu Zellen vereint werden bis nur noch eine einzige Zelle (4) vorhanden ist, wobei nach jeder Vereinigung die aktuell vorliegende Einfach-Netzzerlegung (8) mit dem vorgegebenen Kriterium bewertet und die, Einfach-Netzzerlegung (8) mit dem bis dahin minimalen bzw. maximalen Wert gespeichert wird.

5. Verfahren nach Anspruch 3, **dadurch gekennzeichnet, dass** das Straßennetz rekursiv in Zellen (4) unterteilt wird bis nur noch Einzelzellen vorhanden sind, wobei nach jeder Unterteilung die aktuell vorliegende Einfach-Netzzerlegung (8) mit dem vorgegebenen Kriterium bewertet und die Einfach-Netzzerlegung (8) mit dem bis dahin minimalen bzw. maximalen Wert gespeichert wird.

6. Verfahren nach einem der vorhergehenden Ansprüche, **dadurch gekennzeichnet, dass** eine Vielzahl von Mehrfach-Netzzerlegungen (12) gebildet wird, wobei eine Mehrfach-Netzzerlegung (12) aus Zellen (13) besteht, welche wiederum Zellen (4) als Zellknoten enthalten können.

**7.** Verfahren nach den Ansprüchen 3 und 6, **dadurch gekennzeichnet, dass** die Zellen (4) der besten Einfach-Netzzerlegung (8) rekursiv in Zellen (4) unterteilt werden, wobei die ursprünglichen Zellen erhalten bleiben und wobei nur die Unterteilungen zugelassen werden, die zu einer Mehrfach-Netzzerlegung (12) führen, welche die Zahl der bei der Planung der optimalen Gesamtroute zu bewertenden Kanten (3) gegenüber der vorherigen Netzzerlegung nicht erhöht.

**8.** Verfahren nach den Ansprüchen 3 und 6, **dadurch gekennzeichnet, dass** die Zellen (4) der besten Einfach-Netzzerlegung (8) als Zellknoten rekursiv zu Zellnetzen vereint werden, wobei die ursprünglichen Zellen erhalten bleiben und wobei nur die Vereinigungen zugelassen werden, die zu einer Mehrfach-Netzzerlegung (12) führen, welche die Zahl der bei der Planung der optimalen Gesamtroute zu bewertenden Kanten (3) gegenüber der vorherigen Netzzerlegung nicht erhöht.

**9.** Verfahren nach einem der vorhergehenden Ansprüche, **dadurch gekennzeichnet, dass** die Kosten der optimalen Teilroute gemeinsam mit der Routenkante (10) abgespeichert werden.

**10.** Verfahren nach einem der vorhergehenden Ansprüche, **dadurch gekennzeichnet, dass** die optimale Teilroute gemeinsam mit der Routenkante (10) abgespeichert wird.

**11.** Verfahren nach einem der vorhergehenden Ansprüche, **dadurch gekennzeichnet, dass** bei der Planung der optimalen Gesamtroute die Kosten der Kanten (3, 10) bewertet werden.

**12.** Verfahren nach Anspruch 11, **dadurch gekennzeichnet, dass** die Kosten der Kanten (3, 10) durch eine mit ihnen verknüpfte Länge bestimmt sind.

**13.** Verfahren nach Anspruch 11, **dadurch gekennzeichnet, dass** die Kosten der Kanten (3, 10) durch eine mit ihnen verknüpfte Fahrzeit bestimmt sind.

**14.** Verfahren nach einem der vorhergehenden Ansprüche, **dadurch gekennzeichnet, dass** die optimalen Teilrouten einer Zelle (4) durch einen Routenknoten und mindestens zwei Routenkanten (10) ersetzt werden, wobei die Routenkanten (10) alle Grenzknoten (7) der Zelle (4) mit dem Routenknoten verbinden.

**15.** Verfahren nach Anspruch 14, **dadurch gekennzeichnet, dass** die Kosten der optimalen Teilrouten einer Zelle (4) als Kosten eines Paares von Routenkanten (10) abgespeichert werden.

**16.** Verfahren nach einem der vorgehenden Ansprüche, **dadurch gekennzeichnet, dass** die optimale Gesamtroute die kürzeste Route ist.

**17.** Verfahren nach einem der vorhergehenden Ansprüche, **dadurch gekennzeichnet, dass** die optimale Gesamtroute die schnellste Route ist.

**18.** Verfahren nach einem der vorhergehenden Ansprüche, **dadurch gekennzeichnet, dass** die in der optimalen Gesamtroute enthaltenen Routenkanten (10) durch die zugehörigen optimalen Teilrouten ersetzt werden.

**19.** Verfahren nach einem der vorhergehenden Ansprüche, **dadurch gekennzeichnet, dass** der Teil der Gesamtroute, der zur Zelle (41) des Startknotens (s) gehört, sofort nach seiner Berechnung auf einer Anzeigeeinheit ausgegeben wird.

**20.** Verfahren nach einem der vorhergehenden Ansprüche, **dadurch gekennzeichnet, dass** die Zellgrenzen entlang von natürlichen Trennlinien zwischen Straßen verlaufen.

**21.** Verfahren nach einem der vorhergehenden Ansprüche, **dadurch gekennzeichnet, dass** die Kanten (3) gerichtete Kanten sind.

**Claims**

**1.** Method for determining a breakdown for a road network (1) comprising edges (3) and nodes (2), which breakdown is suitable for planning an optimum overall route, having the following steps:

- a network breakdown which comprises at least two cells (4) is chosen, with each cell (4) containing at least one boundary node (7) which is connected by means of at least one boundary edge (6) to a boundary node (7) in another cell (4),
- optimum route elements are planned within each cell (4) between the boundary nodes (7) which the cell contains,
- a reduced network (9) which is part of the network breakdown is formed by replacing the optimum route elements with route edges (10),

**characterized in that**
precisely that network breakdown from a multiplicity of network breakdowns is selected for which the associated reduced network (9) minimizes, as a prescribed criterion, the average number of edges (3, 10) to be expected that need to be assessed when planning an optimum overall route, wherein the average number of edges (3, 10) to be expected that need to be assessed is determined by the average number of edges (3, 10) of the search networks (14) which are based on the reduced network (9) and which are used for planning an optimum overall route between a starting node and a destination node (s, d), wherein a search network (14) comprises boundary edges (6), boundary nodes (7), route edges (10) and the remaining edges (3) and nodes (2) within the cells (4) of the starting and destination nodes (s, d).

2. Method according to Claim 1, **characterized in that** the number of edges (3, 10) to be expected that need to be assessed when planning an optimum overall route is formed by the sum comprising the average number of edges (3) in the cells (4) of the starting and destination nodes (s, d) and the number of boundary edges (6) and route edges (10) multiplied by the ratio of the area of that portion of the search network (14) that needs to be assessed and the area of the road network and reduced by the route edges (10) in the cells (41, 42) of the starting and destination nodes (s, d).

3. Method according to one of the preceding claims, **characterized in that** the best simple network breakdown (8) from a multiplicity of simple network breakdowns (8) is selected, a simple network breakdown (8) comprising cells (4) which contain exclusively edges (3) and nodes (2).

4. Method according to Claim 3, **characterized in that** the road network is divided into individual cells which each contain only one node (2), and the individual cells are recursively combined to form cells until there is then only a single cell (4), each combination operation being followed by assessment of the currently available simple network breakdown (8) using the prescribed criterion and by storage of the simple network breakdown (8) with the hitherto minimum or maximum value.

5. Method according to Claim 3, **characterized in that** the road network is recursively divided into cells (4) until there are then only individual cells, wherein each division operation is followed by assessment of the currently available simple network breakdown (8) using the prescribed criterion and by storage of the simple network breakdown (8) with the hitherto minimum or maximum value.

6. Method according to one of the preceding claims, **characterized in that** a multiplicity of multiple network breakdowns (12) is formed, a multiple network breakdown (12) comprising cells (13) which may in turn contain cells (4) as cell nodes.

7. Method according to Claims 3 and 6, **characterized in that** the cells (4) of the best simple network breakdown (8) are recursively divided into cells (4), wherein the original cells are maintained and wherein only those divisions which result in a multiple network breakdown (12) which does not increase the number of edges (3) that need to be assessed when planning the optimum overall route in comparison with the previous network breakdown are permitted.

8. Method according to Claims 3 and 6, **characterized in that** the cells (4) of the best simple network breakdown (8) are recursively combined as cell nodes to form cell networks, wherein the original cells are maintained and wherein only those combinations which result in a multiple network breakdown (12) which does not increase the number of edges (3) that need to be assessed when planning the optimum overall route in comparison with the previous network breakdown are permitted.

9. Method according to one of the preceding claims, **characterized in that** the costs of the optimum route element are stored together with the route edge (10).

10. Method according to one of the preceding claims, **characterized in that** the optimum route element is stored together with the route edge (10).

11. Method according to one of the preceding claims, **characterized in that** the costs of the edges (3, 10) are assessed when planning the optimum overall route.

12. Method according to Claim 11, **characterized in that** the costs of the edges (3, 10) are determined by a length that is linked to them.

13. Method according to Claim 11, **characterized in that** the costs of the edges (3, 10) are determined by a travel time that is linked to them.

14. Method according to one of the preceding claims, **characterized in that** the optimum route elements of a cell (4) are replaced by a route node and at least two route edges (10), wherein the route edges (10) connect all the boundary nodes (7) of the cell (4) to the route node.

15. Method according to Claim 14, **characterized in that** the costs of the optimum route elements of a cell (4) are stored as costs for a pair of route edges (10).

16. Method according to one of the preceding claims, **characterized in that** the optimum overall route is the shortest route.

17. Method according to one of the preceding claims, **characterized in that** the optimum overall route is the fastest route.

18. Method according to one of the preceding claims, **characterized in that** the route edges (10) which the optimum overall route contains are replaced by the associated optimum route elements.

19. Method according to one of the preceding claims, **characterized in that** the portion of the overall route that is associated with the cell (41) of the starting node (s) is output on a display unit immediately after it has been calculated.

20. Method according to one of the preceding claims, **characterized in that** the cell boundaries run along natural dividing lines between roads.

21. Method according to one of the preceding claims, **characterized in that** the edges (3) are directional edges.

**Revendications**

1. Procédé de détermination d'une décomposition appropriée à l'itinéraire global le meilleur d'un réseau (1) routier composé de côtés (3) et de noeuds (2), comprenant les stades :

   - sélection d'une décomposition du réseau, qui est constituée d'au moins deux cellules (4), dans lequel il y a dans chaque cellule (4) au moins un noeud (7) limite qui est relié à un noeud (7) limite d'une autre cellule (4) par au moins un côté (6) limite,
   - planification de sous-itinéraires les meilleurs dans chaque cellule (4) entre les noeuds (7) limites présents dans la cellule,
   - formation d'un réseau (9) réduit appartenant à la décomposition du réseau par remplacement des sous-itinéraires les meilleurs par des côtés (10) d'itinéraire, **caractérisé en ce que**

   on sélectionne dans une pluralité de décompositions de réseau précisément la décomposition de réseau dont le réseau (9) réduit associé minimise en tant que critère prescrit le nombre auquel on s'attend en moyenne de côtés (3, 10) à évaluer lors de la planification d'un itinéraire global le meilleur, le nombre auquel on s'attend en moyenne de côtés (3, 10) à évaluer étant déterminé par le nombre moyen des côtés (3, 10) des réseaux (14) de recherche reposant sur le réseau (9) réduit et utilisés pour la planification d'un itinéraire global le meilleur entre un noeud (s) de départ et noeud (d) de destination, un réseau (14) de recherche étant constitué de côtés (6) limites, de noeuds (7) limites, de côtés (10) d'itinéraire et des côtés (3) et noeuds (2) habituels au sein des cellules (4) du noeud (s) de départ et du noeud (d) de destination.

2. Procédé suivant la revendication 1, **caractérisé en ce que** le nombre auquel on s'attend de côtés (3, 10) à évaluer dans la planification d'un itinéraire global le meilleur est formé par la somme du nombre moyen des côtés (3) dans les cellules (4) du noeud (s) de départ et du noeud (d) de destination et du nombre des côtés (6) limites et des côtés (10) d'itinéraire multiplié par le rapport entre la surface de la partie à évaluer du réseau (14) de recherche et la surface du réseau routier réduit des côtés (6) d'itinéraire dans les cellules 40, 41 du noeud (s) de départ et du noeud (5) de destination.

3. Procédé suivant l'une des revendications précédentes, **caractérisé en ce que** l'on sélectionne, dans une pluralité de décompositions (8) de réseau (5) simples, la décomposition (8) de réseau simple la meilleure, une décomposition (8) de réseau simple étant constituée de cellules (4) qui contiennent exclusivement des côtés (3) et des noeuds (2).

4. Procédé suivant la revendication 3, **caractérisé en ce que** l'on subdivise le réseau routier en cellules individuelles qui contiennent respectivement seulement un noeud (2) et on réunit d'une manière récursive les cellules individuelles en des cellules jusqu'à il n'y ait plus qu'une cellule (4) unique, dans lequel après chaque réunification, on évalue par le critère prescrit, la décomposition (8) de réseau simple présente et on mémorise la décomposition (8) de réseau simple ayant la valeur minimum ou maximum jusqu'ici.

5. Procédé suivant la revendication 3, **caractérisé en ce que** l'on subdivise le réseau routier de manière récursive en des cellules (4) jusqu'à ce qu'il n'y ait plus que des cellules individuelles, dans lequel, après chaque subdivision, on évalue par le critère prescrit, la décomposition (8) de réseau simple présente et on mémorise la décomposition (8) de réseau simple ayant la valeur minimum ou maximum jusqu'ici.

6. Procédé suivant l'une des revendications précédentes, **caractérisé en ce qu'**on forme une pluralité de décompositions (12) de réseau multiples, une décomposition (12) de réseau multiple étant constituée de cellules (13) qui peuvent contenir à nouveau des cellules (14) comme noeuds de cellule.

7. Procédé suivant les revendications 3 et 6, **caractérisé en ce que** l'on subdivise les cellules (4) de la décomposition (8) de réseau simple la meilleure de manière récursive en des cellules (4), les cellules d'origine restant conservées et seules étant autorisées les subdivisions qui donnent une décomposition (12) de réseau multiple, qui n'augmente pas le nombre des côtés (3) à évaluer lors de la planification de l'itinéraire globale le meilleur par rapport à la décomposition de réseau précédente.

8. Procédé suivant les revendications 3 ou 6, **caractérisé en ce que** l'on réunit les cellules (4) de la décomposition (8) de réseau simple la meilleure en tant que noeud de cellule de manière récursive en des noeuds de cellule, les cellules d'origine étant conservées et, seule étant autorisées les réunions qui donnent une décomposition (12) de réseau multiple qui n'augmente pas le nombre des côtés (3) à évaluer lors de la planification de l'itinéraire global le meilleur par rapport à la décomposition de réseau présente.

9. Procédé suivant l'une des revendications précédentes, **caractérisé en ce que** l'on mémorise les coûts du sous-itinéraire le meilleur conjointement avec le côté (10) d'itinéraire.

10. Procédé suivant l'une des revendications précédentes, **caractérisé en ce que** l'on mémorise le sous-itinéraire le meilleur conjointement avec le côté (10) d'itinéraire.

11. Procédé suivant l'une des revendications précédentes, **caractérisé en ce que** l'on évalue les coûts des côtés (3, 10) lors de la planification de l'itinéraire globale le meilleur.

12. Procédé suivant la revendication 11, **caractérisé en ce que** l'on détermine les coûts des côtés (3, 10) par une longueur qui leur est affectée.

13. Procédé suivant la revendication 11, **caractérisé en ce que** l'on détermine les coûts des côtés (3, 10) par une durée de trajet qui leur est affectée.

14. Procédé suivant l'une des revendications précédentes, **caractérisé en ce que** l'on remplace les sous-itinéraires les meilleurs d'une cellule (4) par un noeud d'itinéraire et par au moins deux côtés (10) d'itinéraire, les côtés (10) d'itinéraire reliant tous les noeuds (7) limites de la cellule (4) au noeud d'itinéraire.

15. Procédé suivant la revendication 14, **caractérisé en ce que** l'on mémorise les coûts des sous-itinéraires les meilleurs d'une cellule (4) comme coûts d'une paire de côtés (10) d'itinéraire.

**16.** Procédé suivant l'une des revendications précédentes, **caractérisé en ce que** l'itinéraire global le meilleur est l'itinéraire le plus court.

**17.** Procédé suivant l'une des revendications précédentes, **caractérisé en ce que** l'itinéraire global le meilleur est l'itinéraire le plus rapide.

**18.** Procédé suivant l'une des revendications précédentes, **caractérisé en ce que** l'on remplace les côtés (10) d'itinéraire contenus dans l'itinéraire global le meilleur par les sous-itinéraires les meilleurs associés.

**19.** Procédé suivant l'une des revendications précédentes, **caractérisé en ce que** l'on émet sur une unité d'affichage, immédiatement après son calcul, la partie de l'itinéraire globale qui appartient à la cellule (41) d'un noeud (s) de départ.

**20.** Procédé suivant l'une des revendications précédentes, **caractérisé en ce que** les limites de cellule s'étendent le long de lignes de séparation naturelles entre des routes.

**21.** Procédé suivant l'une des revendications précédentes, **caractérisé en ce que** les côtés (3) sont des côtés orientés.

FIG 1

FIG 2

FIG 3

FIG 4

FIG 5

FIG 6

FIG 7

FIG 8

# FIG 9

Bestimmung der Start-Zerlegung N_min

| Einzelzelle um jeden Knoten 2 legen | ⌐S11 |

↓

| Vereinigung von zwei Einzelzellen zur Netzzerlegung N_min | ⌐S12 |

↓

| Bestimmung des reduzierten Netzes N_red/min | ⌐S13 |

↓

| Berchnung des Wertes w_min über die Funktion g für N_red/min | ⌐S14 |

↓

| Speicherung von N_min, N_red/min und w_min | ⌐S15 |

S1

# FIG 10

Bestimmung eines reduzierten Netzes N_red

| Bestimmung der Grenzkanten und Grenzknoten der Netzzerlegung | ⌐S31 |

↓

| Bestimmung der Anzahl der Routenkanten je Zelle | ⌐S32 |

S3 bzw. S13

# FIG 11

S1 — Bestimmung der Start-Zerlegung N_min

S2 — Vereinigung zweier Zellen zur Netzzerlegung N_step

S3 — Bestimmung des reduzierten Netzes N_red/step

S4 — Berechnung des Werts w_step über die Funktion g für N_red/step

S5 — w_step<=w_min?  nein

ja

S6 — N_min=N_step
N_red/min=N_red/step
w_min=w_step

S7 — Anzahl verbliebener Zellen=1?  nein

ja

S8 — Berechnung der optimalen Teilrouten zwischen jeweils zwei Grenzknoten

S9 — Ersetzen der optimalen Teilrouten durch Routenkanten

S10 — Speicherung der Kosten der optimalen Teilrouten zur jeweiligen Routenkante

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9958934 A1
- US 5953722 A
- US 6184823 B1

**In der Beschreibung aufgeführte Nicht-Patentliteratur**

- **JUNG ; PRAMANIK.** An Efficient Path Computation Model for Hierarchically Structured Topographical Road Maps. *IEEE Transactions on Knowledge and Data Engineering,* September 2002, vol. 14 (5), 1029-1046

- Using turn restrictions for faster route planning with partitioned road networks. *Proc. of the 10th Saint Petersburg Int. Conference on Integrated Navigation Systems, Saint Petersburg, Russia,* Mai 2003